# EUROPEAN PATENT APPLICATION

(11) **EP 2 728 535 A1**
(43) Date of publication of application: **07.05.2014**
(21) Application number: 13182502.8
(22) Date of filing: 30.08.2013
(51) Int. Cl.: G06Q 30/02, G06Q 30/06

(54) **Recommending retailers, retailer products, or retailer services**

(30) Priority: 31.10.2012 US 201213665285
(71) Applicant: NCR Corporation, Duluth, GA 30096 (US)
(72) Inventor: Clark, Rachel, Atlanta, GA Georgia 30319 (US); Bande-Ali, Azhar, Decatur, GA Georgia 30033 (US); Morgan, Taylor, Atlanta, GA Georgia 30324 (US); Finley, Michael, Roswell, GA Georgia 30076 (US); Kearns, David, Mahopac, NY New York 10541 (US); Shirah Spreter, Sherry, Atlanta, GA Georgia 30305 (US)
(74) Representative: MacLeod, Roderick William

(57) **Abstract**

Techniques for recommending a retailer, retail products, or retail services are provided. Retail preferences and preferences for specific products and services of a specific retail type are aggregated for a consumer. These preferences are analyzed and clustered with other consumers so that retailer, retail product, and retail service recommendations can be automatically and dynamically made to the consumer.

## Description

Consumers are increasingly using a variety of devices to interact with retailers. For example, consumers routinely research a retailer online before engaging a retailer in business. Nowadays, consumers can even use their own smartphones and tablet devices as kiosks to conduct business with enterprises and redeem offers.

Businesses are increasingly trying to reach this new breed of consumer in order to entice these consumers to frequent the businesses. Unfortunately, most approaches to reach consumers via electronic promotions are not really tailored all that well to the individual consumers and have heretofore not been entirely all that successful in the industry.

Consider the restaurant industry, where consumers have many choices about where they can choose to eat. Often consumers do not have sufficient information about their options and they rarely receive targeted marketing that would be suited to their taste so as to influence the decisions of the consumers. This is because restaurants typically use blanket advertising to all consumers, which is inefficient and wasteful. That is, few services provide the focused and selective electronic promotional advertising that most business want and need to be successful with their electronic marketing campaigns.

In addition to finding a correct match between a specific consumer and a specific restaurant, restaurants would also like to have the ability to know and connect directly with each of their customers in a personal way to establish loyalty with their customers. Consider that most consumers frequent a same restaurant or type of restaurant repeatedly, whether the same location or multiple locations of a particular chain. Restaurants would like to be able to recommend items (food, drinks, wines) to these consumers so that they can expand their menu offerings and provide variety in their offers to consumers. But, consumers have a wide variety of tastes and needs, making recommendations generally not specific to the individual and therefore not very useful. Restaurant specials, for example, may be limited supply items that are unfamiliar to customers but quite profitable to restaurants. It would be particularly advantageous to recommend certain specials to individual consumers based on that consumer's taste.

In various embodiments, techniques for recommending a retailer are presented. According to an embodiment, a method for recommending a retailer is provided.

Specifically, a retail choice made by a consumer is identified. Next, the consumer is assigned to a retail cluster based on the retail choice. Finally, a profile for the retail cluster is used to dynamically recommend a particular retailer to the consumer.

According to a first aspect of the present invention there is provided a processor-implemented method programmed in a non-transitory processor-readable medium and to execute on one or more processors of a machine configured to execute the method, comprising: identifying, at the machine, a retail choice made by a consumer; assigning, at the machine, the consumer to a retail cluster based on the retail choice; and using, at the machine, a profile for the retail cluster to dynamically recommend a particular retailer to the consumer.

Identifying a retail choice optionally further includes aggregating the retail choice with previous retail choices for the consumer across multiple communication channels for the consumer.

The method optionally further comprises creating a vector representing the retail choice and the previous retail choices.

Identifying a retail choice optionally further includes deriving multiple taste profile sets (TPS) for a geographic region based on aggregation of other consumer retail choices for other consumers within the geographic region.

Assigning the consumer to a retail cluster optionally further includes using the vector to assign the consumer to at least one of the TPS that represents the retail cluster.

Assigning the consumer to a retail cluster optionally further includes comparing the retail choice to clusters of likely preference clusters (LPC) to assign the consumer to the retail cluster.

Assigning the consumer to a retail cluster optionally further includes assigning the consumer to the retail cluster and multiple other candidate LPC based on the retail choice.

The method optionally further comprises monitoring subsequent retail choices of the consumer to dynamically update assignment of the consumer from the retail cluster to a different retail cluster that alters subsequent retailer recommendations made to the consumer as well.

The method optionally further comprises adjusting a profile for the retail cluster based on dynamic evaluation of subsequent retail choices made by the consumer and based on dynamic evaluation of other subsequent retail choices made by other consumers assigned to the retail cluster.

According to a second aspect of the present invention there is provided a system comprising: a server having memory configured with a retail recommender manager that executes on the server; and the server or a different device having memory configured with the product or service recommender; wherein retail recommender that is configured to make a recommendation to a consumer for a retailer based on one or more previous retail choices of the consumer, and wherein the product or service recommender is configured to make product or service recommendations to an attendant of the retailer when the consumer is ordering based on prior product or service choices made by the consumer.

The retailer may be a restaurant, and the product or service recommendations may be food and drink recommendations within the restaurant based on a menu of that restaurant.

According to a third aspect of the present invention there is provided a processor-implemented method programmed in a non-transitory processor-readable medium and to execute on one or more processors of a device configured to execute the method, comprising: aggregating, by the device, preferences of a consumer for a particular retail product or service to create a profile; normalizing, by the machine, the profile to create a normalized profile; clustering, by the machine, the normalized profile to a cluster of consumers with similar preferences; and dynamically presenting, by the machine, recommendations for an offered product or service within a retail establishment where the consumer is ordering based on evaluation of a cluster profile for the cluster in view of available products and services for the retail establishment.

Aggregating preferences of a consumer optionally further includes accessing multiple different communication channels to aggregate the preferences.

Aggregating preferences of a consumer optionally further includes recognizing the preferences as food items previously selected by the consumer, the food items representing the particular retail product or service.

Aggregating preferences of a consumer optionally further includes identifying dislikes and likes of the consumer within the preferences.

Aggregating preferences of a consumer optionally further includes identifying portion sizes within the preferences, wherein the particular retail product or service is a restaurant.

Normalizing the profile optionally further includes making a vector of the normalized profile that is then scored for a score.

Clustering the normalized profile optionally further includes comparing the score to other scores of the cluster to cluster the normalized profile with the cluster.

Dynamically presenting recommendations for an offered product or service optionally further includes sending the recommendations to a mobile device of a waiter serving the consumer within the retail establishment.

These and other aspects of the present invention will be apparent from the following specific description, given by way of example, with reference to the accompanying drawings, in which:

FIG. 1 is a diagram of a method for recommending a retailer, according to an example embodiment;

FIG. 2 is a diagram of a method for recommending a retail product or service, according to an example embodiment; and

FIG. 3 is a diagram of a retail recommendation system, according to an example embodiment.

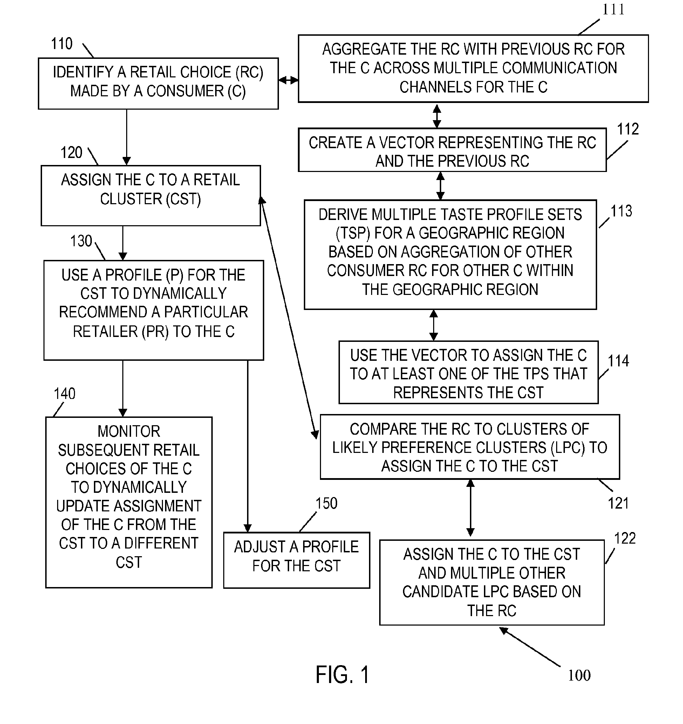

FIG. 1 is a diagram of a method 100 for recommending a retailer, according to an example embodiment. The method 100 (hereinafter "retail recommender") is implemented as instructions programmed and residing on a non-transitory computer-readable (processor-readable) storage medium and executed by one or more processors, server, web-based Internet portal, cloud, virtual machine (VM), etc.) over a network connection. The processors are specifically configured and programmed to process the retail recommender. The retail recommender also operates over a network. The network is wired, wireless, or a combination of wired and wireless.

In an embodiment, the retail recommender executes as a retail server service, which is accessible over a network, such as the Internet. In other instances, the retail recommender is a third-party cloud-based service that a retail establishment subscribes to and is accessible to other services of the retail establishment via a cloud processing environment.

The retail recommender automatically determines restaurants (can be any type or retailer) likely to be preferable to a consumer so that those restaurants may be recommended to the consumer as a benefit to the consumer and the restaurant.

Consumers visit restaurants and express preferences using repeat visits, surveys or social media. Aggregating multiple preference expressions of any single individual provides a profile of that individual's tastes. This profile of the Individual is referred to herein as an Individual Taste Profile (ITP). Aggregating a statistically significant set of consumers in this way provides a sample that represents preferences of a demographic set within a geographic region at any given time. This set of representative ITPs is known as a Taste Profile Set (TPS). The TPS can change over time as the oldest consumer preference expressions are discarded and replaced by newer ones, for example when restaurants close or consumers enter/leave the area.

Using techniques of machine learning, the TPS can be clustered into groups of individuals that share similar tastes. For example, a k-Means algorithm can cluster together similar ITPs. It is noted that there are hundreds of other algorithms that also exist for this purpose; each of which can be used herein without departing from the teachings provided herein. All that is required is that the group, which has been clustered, contains ITPs that are more similar to members of the group than to ITPs in other groups, where "similar" is a metric describing a mathematical relationship between encoded forms of ITPs. One example of this mathematical encoding is a normalized vector with a degree of freedom for each restaurant in the geography where every value in the vector represents the probability that the individual that is related to the ITP would visit the restaurant related to the value. A distance metric in this example could be straight L2 (root of squared differences).

A cluster of ITPs is known as a Shared Preference Cluster (SPC). New consumers in a market belong to an unknown cluster because their preferences are not yet established. But once a new consumer C expresses even a single preference, all known SPCs for that market can be searched to find clusters that also express the same preference as C. This provides a prediction about which SPC(s) the new consumer is most likely to be a member of. The set of clusters that C is most likely to be a member of can be called the Likely Preference Clusters (LPC). Within the LPC, restaurants are chosen that C has not yet visited but which have a high expression of preferences by other members of each LPC. Those restaurants become the ones that are recommended to C. As the preferences of C evolve through expressions, recommendations become more and more likely to accurately reflect the preferences of C.

This approach, as described more below, adapts over time to changing preferences and/or markets. The approach is a completely automated process based on input data and provides a degree of certainty that consumers will like a particular recommended restaurant. The approach also allows restaurants to market to consumers that will probably like them; and allows consumers to receive recommendations that are tuned to their tastes and interest, not just their digital information like location or time of day.

It is within this initial context that the processing of the retail recommender is now described with reference to the FIG. 1.

At 110, the retail recommender identifies a retail choice made by a consumer. A retail choice is a selection by the consumer to go to a particular type or restaurant. The choice may be actively communicated by the consumer to the retail recommender or may be indirectly communicated by the consumer to the retail recommender, such as via credit card data (if permissible), surveys, social network sites, the restaurant where the consumer visited, and the like.

According to an embodiment, at 111, the retail recommender aggregates the retail choice with previous retail choices for the consumer across multiple communication channels for the consumer. For example, a survey can be one type of channel (phone call), a restaurant's consumer loyalty data can be another type, a survey (Internet) can be still another type, and the like.

Continuing with the embodiment of 111 and at 112, the retail recommender creates a vector presenting the retail choice and the previous retail choices. This creates a normalized set of data representing all choices known to date for the consumer.

Still continuing with the embodiment of 112 and at 113, the retail recommender devices multiple Taste Profile Sets (TSP) for a geographical region based on aggregation of other consumer retail choices for other consumers within the geographic region.

Continuing with the embodiment of 113 and at 114, the retail recommender using the vector to assign the consumer to at least one of the TPS that represents the retail cluster.

At 120, the retail recommender assigns the consumer to a retail cluster based on the retail choice. This can be based on an existing set of retail choices known to the consumer and using the new retail choice identified at 110 or this can be based on a very first retail choice made at 110 by the consumer. These situations were discussed above with respect to the context or the FIG. 1.

According to an embodiment, at 121, the retail recommender compares the retail choice to clusters of likely preferences clusters (LPC) for purposes of assigning the consumer to the retail cluster.

Continuing with the embodiment of 121 and at 122, the retail recommender assigns the consumer to the retail cluster and multiple other candidates' LPC based on the retail choice.

At 130, the retail recommender uses a profile for the retail cluster to dynamically recommend a particular retailer to the consumer.

According to an embodiment, at 140, the retail recommender monitors subsequent retail choices of the consumer to dynamically update assignment of the consumer from the retail cluster to a different retail cluster that alters subsequent retailer recommendations made to the consumer as well.

In another case, at 150, the retail recommender adjusts the profile for the retail cluster based on dynamic evaluation of subsequent retail choices made by the consumer based on dynamic evaluation of other subsequent retail choices made by other consumers assigned to the retail cluster.

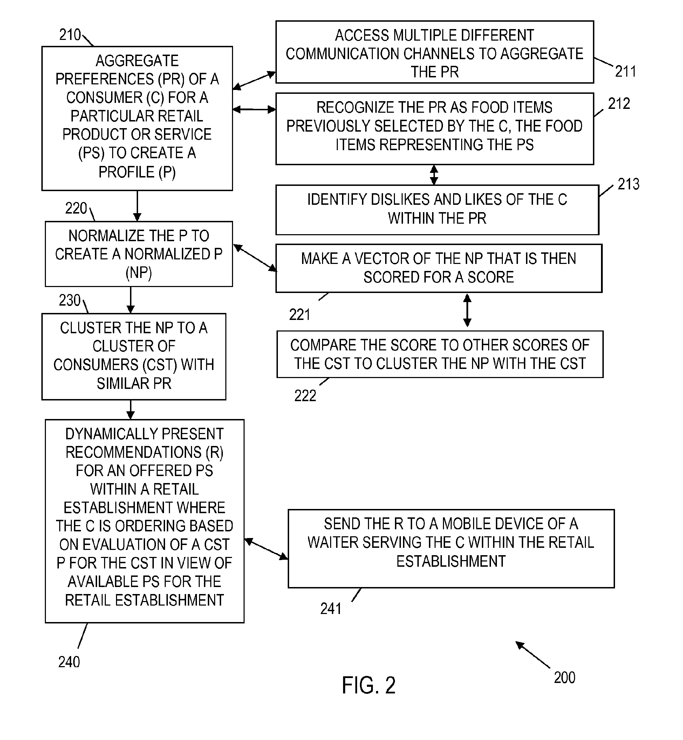

FIG. 2 is a diagram of a method for recommending a retail product or service, according to an example embodiment. The method 200 (hereinafter "product or service recommender") is implemented as instruction and programmed within a non-transitory computer-readable (processor-readable) storage medium that executes on one or more processors of a device; the processors of the device are specifically configured to execute the product or service recommender. The device agent is also operational over a network; the network is wireless.

In an embodiment, the product or service recommender processes on a device that is a server or cloud processing environment that is interfaced to a specific retailer's Point-Of-Sale (POS) devices (terminals or servers). In another case, the product or service recommender processes on a device or set of devices associated with the retailer's POS systems.

Whereas the retail recommender of the FIG. 1 describes processing to custom recommend retail establishments to a specific consumer based on that consumer's tastes, the product or service recommender custom recommends specific products and/or services of a particular retailer that the consumer is already frequenting based on known preferences of that consumer.

The product or service recommender automatically determines retail services/products (such as food items) that are likely to be preferable to a consumer so that those items may be recommended to the consumer as a benefit to consumer and the retailer (such as a restaurant).

For example, consumers visit restaurants and express preferences by ordering items, "favoriting" items on self- service tools, engaging with social media (thumbs-ups, likes, etc.) or responding to surveys (NCR (trade mark) customer voice, survey monkey (trade mark), etc.). Multiple expressions of preference from a single consumer ordering from a single menu provide a way to aggregate a profile for that consumer. This profile can contain, for example, the probability that a consumer chooses beer, wine, soda, or a cocktail. Similarly, this profile indicates the consumer's choice of large or small meals, coursed or simple meals and finally individual items, ingredients, flavors, etc.

Consumer input about specific absolute objections (i.e. lactose intolerance, peanut allergy, kosher only, etc.) can be encoded into this profile as well. Some preferences may be broken out in to day parts (meals) within the profile, such as ordering coffee with breakfast, but only as a desert (and decaf) with dinner.

A simple version of such a profile is a histogram of all menu items, which is accumulated per consumer, essentially counting the number of times that a given consumer ordered a given item within a given time period. The histogram can be extended with additional virtual items, which are attributes of other items that were ordered by the consumer. For example, "alcohol" would be one such histogram bin which would accumulate counts of all choices made including alcohol. Similarly, types of meat could be tracked or portion sizes (binned as ranges). Other versions of a profile exist and could be easily modeled. Over time, older expressions of preference can be discarded and the profile updated with newer information, which allows the profile to adapt dynamically as a consumer's tastes or the restaurant's menu evolves.

The consumer's profile can then be normalized (so that bins represent a probability) and a group of these profiles can then be used to cluster a population into groups of consumers with like tastes. Many techniques exist for this clustering process, such as the k-Means algorithm. Other approaches exist and are well defined in the field of Machine Learning and may be used herein without departing from the teachings of the product or service recommender. It is sufficient to say that every consumer is a member of a cluster. Call this his/her preference cluster.

When a consumer engages with the restaurant, the consumer's profile and preference cluster can be identified based on his/her loyalty Identifier (ID). The profile can be used to exclude items that are absolutely not going to be chosen by the consumer. The preference cluster can be used to suggest which of the remaining items (specials, deserts, wines, etc.) would be preferable. A desert, for example, which this consumer has never ordered but which is a preference for others in the same preference cluster would be a good choice for a recommendation. Given the choice of several items to recommend, the restaurant may choose to recommend the one that results in the highest gross profit to the business or it may recommend the item that has the highest "score" of affinity, which is a mathematical metric associating the consumer's profile, the preference cluster and the specific item in question. If the consumer has not established a profile, the restaurant can provide general recommendations following the consumer's demographic or other ways of linking them to a preference cluster. In this way, restaurants can put expert information in the hands of even the newest members of the wait staff. Furthermore, the restaurant can identify large preference clusters and choose specials or deserts that would appeal to that group, resulting in increased profitability. On the whole, consumers will be surprised and delighted at the level of intimacy that is conveyed in their favorite restaurant(s) becoming tuned to their interests.

The product or service recommender adapts over time to changing preferences, markets. Moreover, the product or service recommender is a completely automated process based on input data that can increases the profitability of a retailer (such as a restaurant) over time. The product or service recommender guides the restaurateur's choice of menu offerings over time as well; and allows consumers to receive recommendations that are tuned to their tastes and interest, not just their digital information like location or time of day.

It is within this context that the processing of the product or service recommender is now discussed with reference to the FIG. 2.

At 210, the product or service recommender aggregates preferences of a consumer for a particular retail product or service to create a profile. This can be achieved in a variety of manners.

For example, at 211, the product or service recommender accessing multiple different communication channels to aggregate the preferences. So, as was discussed above and with respect to the FIG. 1, the preferences can be aggregated over different communication channels via a variety of mechanisms, such as surveys, social media information, transaction data, and the like.

According to an embodiment, at 212, the product or service recommender recognizes the preferences as food items previously selected by the consumer. The food items representing the particular retail product or service.

In another case, at 213, the product or service recommender identifies dislikes and likes of the consumer within the preferences. So, food allergies, and dislikes of the consumer can be positively recited within the preferences to avoid any recommendations related to these dislikes.

In still another case, at 214, the product or service recommender identifies portion sizes within the preferences when the particular retail product or service is a restaurant. So, the preferences can include dislikes as well as likes of the consumer and preferred portion sizes as well.

At 220, the product or service recommender normalizes the profile to create a normalized profile.

In an embodiment, at 221, the product or service recommender makes a vector of the normalized profile that is then scored to create a score.

Continuing with the embodiment of 221 and at 222, the product or service recommender compares the score to other scores of the cluster for purpose of clustering the normalized profile to the cluster.

At 230, the product or service recommender clusters the normalized profile to a cluster of consumers with similar preferences. This was detailed above.

At 240, the product or service recommender dynamically presents recommendations for an offered product or service within a retail establishment where the consumer is ordering based on evaluation of a cluster profile for the cluster in view of available products and services for the retail establishment.

According to an embodiment, at 241, the product or service recommender sends the recommendations to a mobile POS device of a waiter server the consumer within the retail establishment.

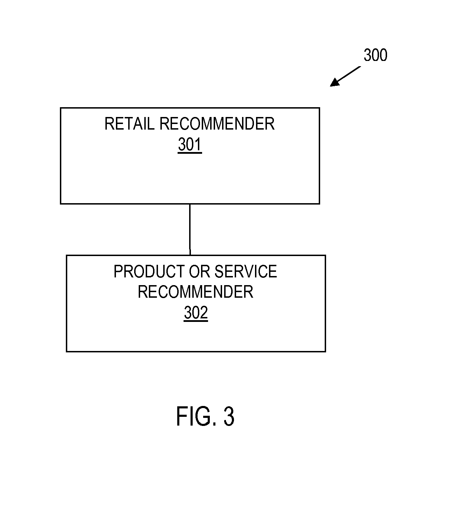

FIG. 3 is a diagram of a retail recommendation system 300, according to an example embodiment. The components of the retail recommendation system 300 are implemented as executable instructions and programmed within a non-transitory computer-readable (processor-readable) storage medium that execute on one or more processors of a network-based server (cloud, proxy, Virtual Machine (VM), etc.) and/or a mobile device (smart phone, tablet, etc.); the processors are specifically configured to execute the components of the retail recommendation system 300. The retail recommendation system 300 is also operational over a network; the network is wired, wireless, or a combination of wired and wireless.

The retail recommendation system 300 includes a retail recommender 301 and a product or service recommender 302. Each of these components and the interactions of each component are now discussed in turn.

The retail recommendation system 300 includes one or more processors of a server or cloud having memory configured with the retail recommender 301; the retail recommender 301 executes on the one or more processors. Example processing associated with the retail recommender 301 was presented in detail above with reference to the method 100 of the FIG. 1.

The retail recommender 301 is configured to make a recommendation to a consumer for a retailer based on one or more previous retail choices of the consumer. This was discussed above in detail with reference to the FIG. 1.

In an embodiment the retailer is a restaurant and the product or service recommendations are food and drink recommendations within the restaurant based on a menu of that restaurant.

The retail recommendation system 300 also includes a same server/cloud device (as the retail recommender), a different server/cloud device (from the retail recommender), or a device of a POS system for a retailer, having memory configured with the product or service recommender 302; the product or service recommender 302 executes on the device. Example processing associated with the product or service recommender 302 was presented in detail above with reference to the method 200 of the FIG. 2.

The product or service recommender 302 is configured to make product or service recommendations to an attendant of the retailer (via an attendant's POS device (can be phone of attendant in some cases) when the consumer is ordering based on prior product or service choices made by the consumer.

The above description is illustrative, and not restrictive. Many other embodiments will be apparent to those of skill in the art upon reviewing the above description. The scope of embodiments should therefore be determined with reference to the appended claims, along with the full scope of equivalents to which such claims are entitled.

In the foregoing description of the embodiments, various features are grouped together in a single embodiment for the purpose of streamlining the disclosure. This method of disclosure is not to be interpreted as reflecting that the claimed embodiments have more features than are expressly recited in each claim. Rather, as the following claims reflect, inventive subject matter lies in less than all features of a single disclosed embodiment.

## Claims

1. A processor-implemented method (100) programmed in a non-transitory processor-readable medium and to execute on one or more processors of a machine configured to execute the method, comprising:
identifying, at the machine, a retail choice made by a consumer (step 110);
assigning, at the machine, the consumer to a retail cluster based on the retail choice (step 120); and
using, at the machine, a profile for the retail cluster to dynamically recommend a particular retailer to the consumer (step 130).

2. The method of claim 1, wherein identifying further includes aggregating the retail choice with previous retail choices for the consumer across multiple communication channels for the consumer (step 111).

3. The method of claim 2 further comprising creating a vector representing the retail choice and the previous retail choices (step 112).

4. The method of claim 3, wherein identifying further includes deriving multiple taste profile sets for a geographic region based on aggregation of other consumer retail choices for other consumers within the geographic region (step 113).

5. The method of claim 4, wherein assigning further includes using the vector to assign the consumer to at least one of the taste profile sets that represents the retail cluster (step 114).

6. The method of any preceding claim, wherein assigning further includes comparing the retail choice to clusters of likely preference clusters to assign the consumer to the retail cluster (step121).

7. The method of claim 6, wherein assigning further includes assigning the consumer to the retail cluster and multiple other candidate likely preference clusters based on the retail choice (step 122).

8. The method of any preceding claim, further comprising monitoring subsequent retail choices of the consumer to dynamically update assignment of the consumer from the retail cluster to a different retail cluster that alters subsequent retailer recommendations made to the consumer as well (step 140).

9. The method of any preceding claim, further comprising adjusting a profile for the retail cluster based on dynamic evaluation of subsequent retail choices made by the consumer and based on dynamic evaluation of other subsequent retail choices made by other consumers assigned to the retail cluster (step 150).

10. A system (300) comprising:
a server having memory configured with a retail recommender manager (301) that executes on the server and is operable to: (i) identify a retail choice made by a consumer (step 110), (ii) assign the consumer to a retail cluster based on the retail choice (step 120), and (iii) use a profile for the retail cluster to dynamically recommend a particular retailer to the consumer (step 130); and
a device having memory configured with a product or service recommender (302) operable to make product or service recommendations to an attendant of the retailer when the consumer is ordering based on prior product or service choices made by the consumer.

11. The system of claim 10, wherein the product or service recommender (302) is operable to make product or service recommendations by: (i) aggregating preferences of a consumer for a particular retail product or service to create a profile, (ii) normalizing the profile to create a normalized profile, (iii) clustering the normalized profile to a cluster of consumers with similar preferences, and (iv) dynamically presenting recommendations for an offered product or service within a retail establishment where the consumer is ordering based on evaluation of a cluster profile for the cluster in view of available products and services for the retail establishment.

12. The system of claim 11, wherein the product or service recommender (302) is operable to aggregate preferences of a consumer by accessing multiple different communication channels to aggregate the preferences.

13. The system of any of claims 10 to 12, wherein the retailer is a restaurant.

14. The system of claim 13, wherein the product or service recommendations are food and drink recommendations within the restaurant based on a menu of that restaurant.

15. The system of any of claims 10 to 14, wherein the device having memory configured with the product or service recommender includes the server.
